# EUROPEAN PATENT APPLICATION

(11) **EP 4 506 433 A1**
(43) Date of publication of application: **12.02.2025**
(21) Application number: 23784765.2
(22) Date of filing: 05.04.2023
(51) Int. Cl.: C09J 11/06, C09J 129/14, C09J 159/00, C09J 161/06

(54) **ADHESIVE COMPOSITION FOR WET FRICTION MATERIAL, AND WET FRICTION PLATE**

(30) Priority: 05.04.2022 JP 2022062802
(71) Applicant: Sumitomo Bakelite Co.Ltd., Shinagawa-ku Tokyo 140-0002 (JP)
(72) Inventor: SUZUKI Yuji, Tokyo 140-0002 (JP)
(74) Representative: Ter Meer Steinmeister & Partner
(86) International application number: PCT/JP2023/014048
(87) International publication number: WO 2023/195481

(57) **Abstract**

Provided is an adhesive agent composition for a wet-type friction member, containing a resol-type phenol resin, a polyvinyl butyral, a carboxylic acid having equal to or more than 1 and equal to or less than 6 carbon atoms, and an alcohol-based solvent.

## Description

### TECHNICAL FIELD

The present invention relates to an adhesive agent composition for a wet-type friction member, and a wet-type friction plate.

### BACKGROUND ART

In automatic transmissions such as automatic cars, a clutch is installed between an engine and a transmission in order to transmit or disconnect an engine force to the transmission when starting, stopping, and shifting. Friction members are used for the clutch to function properly, and are generally classified into a "wet-type friction member" using oil and a "dry-type friction member" not using oil. The wet-type friction member can suppress an increase in frictional heat by using oil. The wet-type friction member is manufactured by coating a metal called a core plate with an adhesive agent and adhering the metal to a friction member made of a phenol resin or the like.

As an adhesive agent used in a case of producing a friction member such as a clutch or a brake, a resol-type phenol resin, which is a resin material having excellent mechanical properties, electrical properties, and adhesiveness, has been used generally. Therefore, in the related art, in order to improve friction characteristics and abrasion characteristics of the wet-type friction member to be obtained and in order to improve curing characteristics such as adhesive strength, the resol-type phenol resin has been subjected to various studies.

As the resol-type phenol resin used for the wet-type friction member, for example, resol-type phenol resins disclosed in Patent Documents 1 and 2 have been known. Patent Document 1 discloses, as an adhesive agent for a friction member with short curing time and high heat resistance, an adhesive agent composition containing a resol-type phenol resin, a polyvinyl butyral resin, nickel acetate or cobalt acetate, which is a polyvalent metal salt, and a metal salt of nitrous acid or an ester of nitrous acid.

Patent Document 2 discloses an adhesive agent for a wet-type friction plate, containing a resol-type phenol resin and a nitrate or nitric acid, with which excellent adhesive strength exhibits.

### RELATED DOCUMENT

### PATENT DOCUMENT

[Patent Document 1] Japanese Unexamined Patent Publication No. 2014-24881
[Patent Document 2] Japanese Unexamined Patent Publication No. 2006-83892

### SUMMARY OF THE INVENTION

### TECHNICAL PROBLEM

In recent years, demands for an adhesive agent for a wet-type friction member have been increased. The present invention has been developed in order to meet these demands, and provides an adhesive agent composition for a wet-type friction member, which has excellent adhesive strength and further has heat resistance (suppression of decrease in adhesive strength under high temperature).

### SOLUTION TO PROBLEM

The present inventors have found that, by blending a carboxylic acid having 1 to 6 carbon atoms into a resin composition containing a phenol resin, it is possible to obtain an adhesive agent which has excellent adhesive force, excellent heat resistance (suppression of decrease in adhesive strength under high temperature), and is suitable for wet-type friction member applications, and have completed the present invention.

According to the present invention, there are provided an adhesive agent composition for a wet-type friction member and a wet-type friction plate shown below.

[1] An adhesive agent composition for a wet-type friction member, containing:
   a resol-type phenol resin;
   a polyvinyl butyral;
   a carboxylic acid having equal to or more than 1 and equal to or less than 6 carbon atoms; and
   an alcohol-based solvent.
[2] The adhesive agent composition for a wet-type friction member according to [1],
   in which a content of the carboxylic acid having equal to or more than 1 and equal to or less than 6 carbon atoms is equal to or more than 0.1% by mass and equal to or less than 10% by mass with respect to a solid content of the adhesive agent composition for a wet-type friction member.
[3] The adhesive agent composition for a wet-type friction member according to [1] or [2],
   in which the carboxylic acid having equal to or more than 1 and equal to or less than 6 carbon atoms includes acetic acid.
[4] The adhesive agent composition for a wet-type friction member according to any one of [1] to [3],
   in which the alcohol-based solvent includes at least one selected from methanol, ethanol, 1-propanol, 2-propanol, n-butyl alcohol, isobutyl alcohol, sec-butyl alcohol, or tert-butyl alcohol.
[5] The adhesive agent composition for a wet-type friction member according to any one of [1] to [4],
   in which the adhesive agent composition for a wet-type friction member does not substantially contain nickel.
[6] The adhesive agent composition for a wet-type friction member according to any one of [1] to [5],
   in which the adhesive agent composition for a wet-type friction member does not substantially contain cobalt.
[7] The adhesive agent composition for a wet-type friction member according to any one of [1] to [6],
   in which a methanol tolerance (25°C) is equal to or more than 1000%.
[8] A wet-type friction plate including:
   a metal base material; and
   a friction member adhered to the metal base material through the adhesive agent composition for a wet-type friction member according to any one of [1] to [7].

### ADVANTAGEOUS EFFECTS OF INVENTION

According to the present invention, there are provided an adhesive agent composition for a wet-type friction member, which has excellent adhesive strength and has high heat resistance, and a wet-type friction plate produced using the same.

### DESCRIPTION OF EMBODIMENTS

Hereinafter, embodiments of the present invention will be described.

### [Adhesive agent composition for wet-type friction member]

The adhesive agent composition for a wet-type friction member (hereinafter, also referred to as "adhesive agent composition") according to the present embodiment contains a resol-type phenol resin, a polyvinyl butyral, a carboxylic acid having equal to or more than 1 and equal to or less than 6 carbon atoms, and an alcohol-based solvent. Hereinafter, each component will be described.

### (Resol-type phenol resin)

The resol-type phenol resin used in the adhesive agent composition according to the present embodiment is a resol-type phenol resin obtained by reacting a phenol resin and aldehydes in the presence of a basic catalyst.

Examples of phenols used for the synthesis of the resol-type phenol resin used in the present embodiment include phenol; cresols such as o-cresol, m-cresol, and p-cresol; ethylphenols such as o-ethylphenol, m-ethylphenol, and p-ethylphenol; butylphenols such as isopropylphenol, butylphenol, and p-tertbutylphenol; alkylphenols such as p-tert-amylphenol, p-octylphenol, p-nonylphenol, and p-cumylphenol; halogenated phenols such as fluorophenol, chlorophenol, bromophenol, and iodophenol; monovalent phenol substitutions such as p-phenylphenol, aminophenol, nitrophenol, dinitrophenol, and trinitrophenol; monovalent phenols such as 1-naphthol and 2-naphthol; and polyvalent phenols such as resorcin, alkylresorcin, pyrogallol, catechol, alkylcatechol, hydroquinone, alkylhydroquinone, fluoroglucolcin, bisphenol A, bisphenol F, bisphenol S, and dihydroxynaphthalin. These can be used alone or in combination of two or more kinds thereof.

Examples of the aldehydes used to synthesize the resol-type phenol resin used in the present embodiment include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenyl acetaldehyde, o-tolualdehyde, and salicylaldehyde. These may be used alone or in combination of two or more thereof. In addition, it is also possible to use a precursor of these aldehydes or a solution of these aldehydes. Among these, from the viewpoint of production cost, it is preferable to use an aqueous solution of formaldehyde.

Examples of the basic catalyst used to synthesize the resol-type phenol resin used in the present embodiment include hydroxides of alkali metals or alkaline earth metals such as sodium hydroxide, potassium hydroxide, and calcium hydroxide; carbonates such as sodium carbonate and calcium carbonate; oxides such as lime; sulfites such as sodium sulfite; phosphates such as sodium phosphate; and amines such as ammonia, trimethylamine, triethylamine, monoethanolamine, diethanolamine, triethanolamine, hexamethylenetetramine, and pyridine.

Water is generally used as the reaction solvent used to synthesize the resol-type phenol resin used in the present embodiment, but an organic solvent may be used. Specific examples of such an organic solvent include alcohols, ketones, and aromatics. In addition, specific examples of the alcohols include methanol, ethanol, propyl alcohol, ethylene glycol, diethylene glycol, triethylene glycol, and glycerin. Specific examples of the ketones include acetone and methyl ethyl ketone. Specific examples of the aromatics include toluene and xylene.

Examples of a form of the resol-type phenol resin include solids, aqueous solutions, solvent solutions, and aqueous dispersions. Among these, from the viewpoint of improving workability, a solution obtained by dissolving the resol-type phenol resin in a solvent such as methanol, ethanol, methyl ethyl ketone, and acetone is preferable.

The resol-type phenol resin used in the adhesive agent composition according to the present embodiment preferably has a weight average molecular weight of equal to or more than 1,000 and equal to or less than 3,000, and more preferably has a weight average molecular weight of equal to or more than 1,200 and equal to or less than 2,000. With the resol-type phenol resin having a weight average molecular weight within the above-described range, both excellent adhesiveness and solvent solubility can be achieved. As a result, the adhesive agent composition containing such a resol-type phenol resin can have excellent adhesiveness and excellent coatability or excellent handleability.

An amount of a free phenol contained in the resol-type phenol resin used in the present embodiment is preferably equal to or less than 5.0% by mass, more preferably equal to or less than 4.0% by mass with respect to the total of the resol-type phenol resin. The lower limit value of the amount of the free phenol contained in the resol-type phenol resin is not particularly limited, but is, for example, equal to or more than 0.1% by mass, preferably equal to or more than 0.5% by mass with respect to the total of the resol-type phenol resin. In a case where the amount of the free phenol is equal to or less than the above-described upper limit value, the resol-type phenol resin has excellent storage stability. In addition, in a case where the amount of the free phenol is equal to or more than the above-described lower limit value, since no special equipment or process is required to completely remove the free aldehyde, the production cost can be suppressed.

The resol-type phenol resin used in the present embodiment is obtained by charging, into a reaction vessel, the phenols (P) and the aldehydes (F) in a reaction at a ratio such that a blending molar ratio (F/P) is equal to or more than 1.5, preferably equal to or more than 1.5 and equal to or less than 2.0 and more preferably equal to or more than 1.6 and equal to or less than 1.9, further adding the above-described basic catalyst as a polymerization catalyst, and performing reflux for an appropriate time (for example, 3 to 6 hours). In a case where the blending molar ratio (F/P) of the phenols (P) and the aldehydes (F) is less than 1.5, the weight average molecular weight of the resol-type phenol resin produced may be smaller than 1000. In addition, in a case where the blending molar ratio (F/P) of the phenols (P) and the aldehydes (F) is more than 2.0, since gelation of the resin tends to proceed during the reaction, reaction efficiency is lowered, and a high-molecular-weight resol-type phenol resin having a weight average molecular weight of more than 3000 is produced, which is not preferable. A reaction temperature is, for example, 40°C to 120°C, preferably 60°C to 100°C. As a result, the gelation can be suppressed and a resol-type phenol resin having a target molecular weight can be obtained.

### (Polyvinyl butyral)

The polyvinyl butyral used in the adhesive agent composition according to the present embodiment is an elastomer obtained by converting polyvinyl alcohol to butyral with butyraldehyde in the presence of an acid catalyst. A weight average molecular weight of the polyvinyl butyral is not particularly limited, but from the viewpoint of handleability of the polyvinyl butyral, and the like, the weight average molecular weight thereof is preferably 1.0 × 10⁴ to 1.0 × 10⁵, more preferably 2.0 × 10⁴ to 8.0 × 10⁴, and still more preferably 3.3 × 10⁴ to 5.5 × 10⁴. The weight average molecular weight is based on polystyrene conversion measured by gel permeation chromatography (GPC).

A degree of polymerization of the polyvinyl butyral is preferably 200 to 3,000. By using polyvinyl butyral having a degree of polymerization of equal to or more than 200, the obtained adhesive agent composition has sufficient adhesive strength to be used as a friction member; and by using polyvinyl butyral having a degree of polymerization of equal to or less than 3,000, the viscosity of the obtained adhesive agent composition during melting can be suppressed to a low level, so that the handleability in a case of being applied onto a metal base material is improved, and the friction member and the metal base material can be firmly adhered to each other.

A content of the polyvinyl butyral is preferably equal to or more than 1 part by weight and equal to or less than 50 parts by weight, and more preferably equal to or more than 5 parts by weight and equal to or less than 30 parts by weight with respect to 100 parts by weight of the resol-type phenol resin. By setting the content of the polyvinyl butyral to equal to or more than the lower limit value, the obtained adhesive agent composition has sufficient adhesive strength to be used as a friction member; and by setting the content to equal to or less than the upper limit value, the viscosity of the adhesive agent composition during melting can be suppressed to a low level, and the coatability and workability can be improved.

### (Carboxylic acid having 1 to 6 carbon atoms)

The adhesive agent composition according to the present embodiment contains a carboxylic acid having equal to or more than 1 and equal to or less than 6 carbon atoms. Examples of the carboxylic acid having equal to or more than 1 and equal to or less than 6 carbon atoms include formic acid, acetic acid, propionic acid, and butyric acid. These may be used alone or in combination of two or more kinds thereof. Among these, from the viewpoint of improving the adhesive strength of the obtained adhesive agent composition, and viewpoint of handleability and ease of obtaining, it is preferable to use acetic acid. By containing the above-described carboxylic acid, it is possible to obtain an adhesive agent composition in which the adhesive strength is further improved.

A content of the above-described carboxylic acid in the adhesive agent composition is preferably equal to or more than 0.1% by mass and equal to or less than 10% by mass, more preferably equal to or more than 1% by mass and equal to or less than 10% by mass, and still more preferably equal to or more than 2% by mass and equal to or less than 10% by mass with respect to the total solid content of the composition. By setting the content of the carboxylic acid within the above-described range, the obtained adhesive agent composition has sufficient adhesive strength to be used as a friction member, and has excellent heat resistance (suppression of decrease in adhesive strength under high temperature).

The adhesive agent composition according to the present embodiment is substantially free of substances with high environmental load, such as nickel and cobalt, which are used in adhesive agents in the related art for improving adhesiveness. In such an adhesive agent composition according to the present embodiment, since wear debris generated during braking of a friction plate produced using the adhesive agent composition does not contain substances with high environmental load, there is no risk of environmental pollution. In addition, the adhesive agent composition according to the present embodiment can exhibit high adhesiveness and heat resistance (suppression of decrease in adhesive strength under high temperature) even in a case of not containing nickel or cobalt by containing the iron salt.

### (Alcohol-based solvent)

The adhesive agent composition according to the present embodiment is provided as a liquid material in which the above-described components are dissolved or dispersed in an alcohol-based solvent. Examples of the alcohols used as the solvent of the adhesive agent composition according to the present embodiment include methanol, ethanol, 1-propanol, 2-propanol, n-butyl alcohol, isobutyl alcohol, sec-butyl alcohol, and tert-butyl alcohol. These may be used alone or in combination of two or more kinds thereof. Among these, from the viewpoint of handleability, methanol is preferably used.

### (Iron salt)

The adhesive agent composition according to the present embodiment may contain an iron salt. Examples of the iron salt include a second iron salt or a third iron salt. The iron salt is preferably a sulfate such as ferrous sulfate and ferric sulfate. Specific examples of the sulfate include ferrous sulfate, ferrous sulfate heptahydrate, and ammonium ferric sulfate. These may be used alone or in combination of two or more kinds thereof.

In a case of using the iron salt, a content thereof is preferably equal to or more than 0.1% by mass and equal to or less than 10% by mass, more preferably equal to or more than 0.5% by mass and equal to or less than 8% by mass, and still more preferably equal to or more than 0.8% by mass and equal to or less than 6% by mass with respect to the total solid content of the composition. By setting the content of the iron salt within the above-described range, the obtained adhesive agent composition has sufficient adhesive strength to be used as a friction member, and has excellent heat resistance (suppression of decrease in adhesive strength under high temperature).

### (Other components)

The adhesive agent composition according to the present embodiment may contain, in addition to the above-described components, an additive such as an elastomer, for example, nitrile butadiene rubber and styrene butadiene rubber, a surfactant, a flame retardant, an antioxidant, a coloring agent, and a silane coupling agent, as long as the effects of the present invention are not impaired.

### (Production of adhesive agent composition)

The adhesive agent composition according to the present embodiment is obtained by mixing the above-described components in the above-described alcohol-based solvent by a known method.

Since the adhesive agent composition according to the present embodiment contains the above-described components, the adhesive agent composition according to the present embodiment has excellent adhesiveness and heat resistance, and also has excellent solvent solubility. The adhesive agent composition according to the present embodiment has a methanol tolerance (25°C), as an index of solubility, of equal to or more than 1000%. Therefore, the adhesive agent composition according to the present embodiment has excellent workability during use and coatability. As the value of the methanol tolerance is higher, solubility in methanol is higher, and equal to or more than 100% is required for the use of an adhesive agent for a wet-type friction member.

The methanol tolerance can be measured as follows.

First, 10 ml of the adhesive agent composition is measured in a 500 ml graduated cylinder, and methanol is gradually added thereto while keeping the temperature at 25°C and stirring. The methanol tolerance is calculated by the following expression from the amount (volume) of methanol added in a case where the mixed solution of the adhesive agent composition and the methanol becomes cloudy. Methanol tolerance (%) = (addition amount (ml) of methanol/10 ml of adhesive agent composition) × 100

In addition, a viscosity of the adhesive agent composition according to the present embodiment is, for example, equal to or more than 300 mPa and equal to or less than 10,000 mPa, preferably equal to or more than 450 mPa and equal to or less than 8,000 mPa and more preferably equal to or more than 600 mPa and equal to or less than 6,000 mPa. The adhesive agent composition having a viscosity in such a range has high adhesive strength and is excellent in workability and coatability.

The viscosity is measured using an E-type viscometer (manufactured by Toki Sangyo Co., Ltd.) in accordance with JIS Z 8803.

### [Wet-type friction plate]

The adhesive agent composition according to the present embodiment is suitably used for producing a wet-type friction plate. The wet-type friction plate is produced by adhering a metal base material (steel plate) and a friction plate to each other using the adhesive agent composition according to the present embodiment. More specifically, the wet-type friction plate is produced by applying the adhesive agent composition according to the present embodiment onto a metal base material, and disposing and adhering a friction member on a surface of the metal base material, to which the adhesive agent composition is applied. Since the adhesive agent composition according to the present embodiment has excellent coatability and workability, the above-described steps can be carried out successfully. In addition, since the friction plate and the metal base material are firmly adhered to each other in the wet-type friction plate obtained as described above, the wet-type friction plate has excellent strength.

The embodiments of the present invention have been described above, but these are examples of the present invention and various configurations other than the above can be adopted.

### EXAMPLES

Hereinafter, the present invention will be described with reference to Examples and Comparative Examples, but the present invention is not limited thereto.

### [Preparation of adhesive agent composition]

### (Example 1)

To a reaction device with a stirrer, a reflux condenser, and a thermometer, 100 parts by weight of phenol, 151 parts by weight of 37% formalin aqueous solution (F/P molar ratio = 1.7), and 5 parts by weight of triethylamine were added, and the mixture was reacted under reflux conditions for 40 minutes. Thereafter, while dehydrating under a reduced pressure condition of 91 kPa, 40 parts by weight of methanol was added thereto when the temperature in the system reached 70°C, and the reaction was carried out at 80°C for 2 hours to obtain a resol-type phenol resin having a weight average molecular weight of 1,382. 120 parts by weight of methanol, 30 parts by weight of a polyvinyl butyral resin, and 4.5 parts by weight of acetic acid were added thereto, and dissolved and mixed with each other to obtain an adhesive agent composition having 1.5% of free phenol and 50% of non-volatile content.

### (Example 2)

An adhesive agent composition was obtained in the same manner as in Example 1, except that the addition amount of the acetic acid was changed to 9.0 parts by weight.

### (Example 3)

An adhesive agent composition was obtained in the same manner as in Example 1, except that 1.5 parts by weight of ferrous sulfate (II) was added in addition to the 4.5 parts by weight of acetic acid.

### (Comparative Example 1)

To a reaction device with a stirrer, a reflux condenser, and a thermometer, 100 parts by weight of phenol, 151 parts by weight of 37% formalin aqueous solution (F/P molar ratio = 1.7), and 5 parts by weight of triethylamine were added, and the mixture was reacted under reflux conditions for 40 minutes. Thereafter, while dehydrating under a reduced pressure condition of 91 kPa, 40 parts by weight of methanol was added thereto when the temperature in the system reached 70°C, and the reaction was carried out at 80°C for 2 hours to obtain a resol-type phenol resin having a weight average molecular weight of 1,382. 120 parts by weight of methanol and 30 parts by weight of a polyvinyl butyral resin were added thereto, and dissolved and mixed with each other to obtain an adhesive agent composition for a wet-type friction member, having 1.5% of free phenol and 50% of non-volatile content.

### (Comparative Example 2)

To a reaction device with a stirrer, a reflux condenser, and a thermometer, 100 parts by weight of phenol, 117 parts by weight of 37% formalin aqueous solution (F/P molar ratio = 1.2), and 4 parts by weight of 30% ammonia aqueous solution were added, and the mixture was reacted under reflux conditions for 40 minutes. Thereafter, while dehydrating under a reduced pressure condition of 91 kPa, 20 parts by weight of methanol was added thereto when the temperature in the system reached 70°C, and the reaction was carried out at 80°C for 1 hour. Next, 80 parts by weight of methanol was added thereto to obtain a resol-type phenol resin having 50% of non-volatile content.

100 parts by weight of the obtained resol-type phenol resin, 12 parts by weight of a polyvinyl butyral resin, and 12 parts by weight of methanol were dissolved and mixed with each other to obtain an adhesive agent composition.

### (Comparative Example 3)

To a reaction device with a stirrer, a reflux condenser, and a thermometer, 100 parts by weight of phenol, 117 parts by weight of 37% formalin aqueous solution (F/P molar ratio = 1.2), and 4 parts by weight of 30% ammonia aqueous solution were added, and the mixture was reacted under reflux conditions for 40 minutes. Thereafter, while dehydrating under a reduced pressure condition of 91 kPa, 20 parts by weight of methanol was added thereto when the temperature in the system reached 70°C, and the reaction was carried out at 80°C for 1 hour. Next, 80 parts by weight of methanol was added thereto to obtain a resol-type phenol resin having 50% of non-volatile content.

100 parts by weight of the obtained resol-type phenol resin, 13 parts by weight of a polyvinyl butyral resin, 2 parts by weight of resorcin, and 15 parts by weight of methanol were dissolved and mixed with each other to obtain an adhesive agent composition containing 3% by mass of resorcin with respect to the total solid content.

### [Evaluation]

The adhesive agent compositions obtained in Examples 1 to 3 and Comparative Examples 1 to 3 were measured for the following physical properties, and the performance thereof was evaluated.

### (Solvent solubility)

The solvent solubility was evaluated by measuring a methanol tolerance. As the methanol tolerance value is larger, the solubility of the resin composition in methanol is higher.

Measurement of methanol tolerance: first, 10 ml of the adhesive agent composition was measured in a 500 ml graduated cylinder, and methanol was gradually added thereto while keeping the temperature at 25°C and stirring; the methanol tolerance was calculated by the following expression from the amount (volume) of methanol added in a case where the mixed solution of the adhesive agent composition and the methanol became cloudy; the results are shown in Table 1. Methanol tolerance (%) = (addition amount (ml) of methanol/10 ml of adhesive agent composition) × 100

### (Viscosity)

Measurement of viscosity: viscosity of the adhesive agent composition was measured using an E-type viscometer (manufactured by Toki Sangyo Co., Ltd.) in accordance with JIS Z8803; the results are shown in Table 1.

### (Adhesive strength)

The adhesive strength of the adhesive agent composition was evaluated by measuring a non-peel area ratio in a case of being adhered at a temperature of 250°C and in a case of being adhered at a temperature of 300°C. As the value of the non-peel area ratio is larger, the adhesive strength is higher.

Measurement of non-peel area ratio (adhesion temperature: 250°C): the above-described adhesive agent composition was applied to a pickled steel plate, an impregnated paper, which was produced by impregnating and curing an aramid base material with a phenol resin, was adhered thereto by a heat press (250°C, 10 MPa), and an area where an adhesive surface was not peeled off in a case of being bent at 90° was measured and a proportion (%) to an adhesive area before the bending was calculated; the results are shown in Table 1.

Measurement of non-peel area ratio (adhesion temperature: 300°C): the above-described adhesive agent composition was applied to a pickled steel plate, an impregnated paper, which was produced by impregnating and curing an aramid base material with a phenol resin, was adhered thereto by a heat press (300°C, 10 MPa), and an area where an adhesive surface was not peeled off in a case of being bent at 90° was measured and a proportion (%) to an adhesive area before the bending was calculated; the results are shown in Table 1.

**[Table 1]**

| | | Unit | Example 1 | Example 2 | Example 3 | Comparative Example 1 | Comparative Example 2 | Comparative Example 3 |
|---|---|---|---|---|---|---|---|---|
| Physical properties | Methanol tolerance (25° C) | | > 2000 | > 2000 | > 2000 | > 2000 | > 2000 | > 2000 |
| | Viscosity | mPas | 1100 | 950 | 1000 | 900 | 1000 | 1000 |
| Evaluation of adhesive strength | Non-peel area ratio (adhesion at 250° C) | | 100 | 100 | 100 | 100 | 40 | 100 |
| | Non-peel area ratio (adhesion at 300° C) | | 100 | 100 | 100 | 50 | 40 | 50 |

The adhesive agent compositions of Examples had high adhesive strength in both the case of being adhered at a temperature of 250°C and the case of being adhered at a temperature of 300°C.

Priority is claimed on Japanese Patent Application No. 2022-062802, filed April 5, 2022, the disclosure of which is incorporated herein by reference.

## Claims

1. An adhesive agent composition for a wet-type friction member, comprising:
a resol-type phenol resin;
a polyvinyl butyral;
a carboxylic acid having equal to or more than 1 and equal to or less than 6 carbon atoms; and
an alcohol-based solvent.

2. The adhesive agent composition for a wet-type friction member according to claim 1,
wherein a content of the carboxylic acid having equal to or more than 1 and equal to or less than 6 carbon atoms is equal to or more than 0.1% by mass and equal to or less than 10% by mass with respect to a solid content of the adhesive agent composition for a wet-type friction member.

3. The adhesive agent composition for a wet-type friction member according to claim 1 or 2,
wherein the carboxylic acid having equal to or more than 1 and equal to or less than 6 carbon atoms includes acetic acid.

4. The adhesive agent composition for a wet-type friction member according to any one of claims 1 to 3,
wherein the alcohol-based solvent includes at least one selected from methanol, ethanol, 1-propanol, 2-propanol, n-butyl alcohol, isobutyl alcohol, sec-butyl alcohol, or tert-butyl alcohol.

5. The adhesive agent composition for a wet-type friction member according to any one of claims 1 to 4,
wherein the adhesive agent composition for a wet-type friction member does not substantially contain nickel.

6. The adhesive agent composition for a wet-type friction member according to any one of claims 1 to 5,
wherein the adhesive agent composition for a wet-type friction member does not substantially contain cobalt.

7. The adhesive agent composition for a wet-type friction member according to any one of claims 1 to 6,
wherein a methanol tolerance (25°C) is equal to or more than 1000%.

8. A wet-type friction plate comprising:
a metal base material; and
a friction member adhered to the metal base material through the adhesive agent composition for a wet-type friction member according to any one of claims 1 to 7.
